# EUROPÄISCHE PATENTSCHRIFT

(11) **EP 0 857 154 B1**
(45) Veröffentlichungstag und Bekanntmachung des Hinweises auf die Patenterteilung: **20.09.2000**
(21) Anmeldenummer: 96937263.0
(22) Anmeldetag: 28.10.1996
(51) Int. Cl.: B65H 5/02, B65H 29/16, B41F 21/00, H02N 13/00

(54) **EINRICHTUNG ZUM FÖRDERN VON BOGEN IN EINER DRUCKTECHNISCHEN MASCHINE**
DEVICE FOR CONVEYING SHEETS IN A PRINTING MACHINE
DISPOSITIF POUR ACHEMINER DES FEUILLES DANS UNE MACHINE A IMPRIMER

(30) Priorität: 28.10.1995 DE 19540210; 21.10.1996 DE 19643106
(43) Veröffentlichungstag der Anmeldung: 12.08.1998
(73) Patentinhaber: Heidelberger Druckmaschinen Aktiengesellschaft, 69115 Heidelberg (DE)
(72) Erfinder: COMPERA, Christian, D-69250 Schönau (DE); METZLER, Patrick, D-66606 St. Wendel (DE); RODI, Anton, D-69181 Leimen (DE); SCHÖNFELD, Carsten, D-68799 Reilingen (DE); SCHULZ, Peter, D-66909 Matzenbach (DE); WEISS, Paul, D-66851 Queidersbach (DE)
(86) Internationale Anmeldenummer: EP9604677
(87) Internationale Veröffentlichungsnummer: WO9716366

(56) Entgegenhaltungen:
- GB-A- 2 232 147
- US-A- 5 255 904
- US-A- 5 382 014
- Patent Abstracts of Japan, Band 7, Nr 199(M-240); & JP,A,58100042 (CANON K.K.), 1983-06-14

## Beschreibung

Die Erfindung betrifft eine Einrichtung zum Fördern von Bogen in einer drucktechnischen Maschine.

Es ist bekannt, mit Hilfe von elektrostatischen Mitteln Bogen festzuhalten und zu transportieren. Bei der in US 4,244,465 gezeigten Lösung werden die Bogen auf einem Förderband transportiert, in das zwei Gruppen von streifenförmigen und gleichabständigen Elektroden integriert sind. Die Elektroden sind von einem isolierenden Material umgeben. Die Elektroden werden über Kontakte an eine Hochspannungsquelle gelegt, so daß über die Oberfläche des Förderbandes ein elektrostatisches Feld erzeugt wird. Es ist ein Nachteil dieser Lösung, daß die Elektroden mit dem Band umlaufen. Dadurch stellt sich ein erhöhter Verschleiß der Elektroden und des Bandes ein. Des weiteren hebt sich die Struktur der Elektroden an der Oberfläche des Förderbandes ab, wodurch die Ebenheit der Auflagefläche beeinträchtigt ist, was zu Nachteilen beim Fördern und Bearbeiten dünner Bogen führen kann. Durch Oberflächenentladungen werden die auf den Bogen wirkenden Haltekräfte vermindert, dadurch kann es notwendig sein, die Hochspannung umzupolen. Das von den Elektroden ausgehende inhomogene Feld kann von den Bogen nicht vollständig ausgeglichen werden, wodurch verstärkt Staubanlagerungen am Förderband auftreten. Durch eine parasitäre Corona, die sich bei der Entnahme der Bogen vom Förderband ausbilden kann, sammeln sich in der die Elektroden überdeckenden Isolierschicht Oberflächenladungen an. Dadurch kann die Oberfläche des Transportbandes passiviert werden, wodurch die Kraftwirkung auf die Bogen verloren gehen kann.

Eine auf dem gleichen Prinzip beruhende Vereinzelungsvorrichtung für Bogen ist in US 4,526,357 beschrieben.

In der europäischen Patentanmeldung EP 0 297 227 A2 ist eine elektrostatische Haltevorrichtung gezeigt, bei der in ein Basismaterial paarweise Elektroden eingebettet sind, die an Spannungsquellen liegen, welche alternierend ihre Polarität wechseln.

In DE 40 152 10 A1 ist eine Bogentransportvorrichtung mit einem Endlosband gezeigt, bei der im Bandmaterial keine Elektroden vorgesehen sind. Mit Hilfe einer über die Breite des Bandes reichenden Elektrode, die mit einer Wechselspannungsquelle in Verbindung steht, wird in berührender Weise auf der Oberfläche des Bandes ein Ladungsdichtemuster ausgebildet. Das sich ergebende nicht gleichförmige elektrische Feld influenziert im Material der Bogen Spiegelladungen, woraus sich eine Haltekraft der Bogen auf der Oberfläche des Bandes ergibt.

Um gleichmäßige Haltekräfte zu erreichen, sollte die Frequenz der Wechselspannung phasengleich mit der Umlaufgeschwindigkeit des Bandes sein, was einen steuerungstechnischen Aufwand mit sich bringt. Da die Phasengleichheit nicht vollkommen zu realisieren ist, werden z. B. positiv geladene Bereiche beim nächsten Umlauf des Bandes negativ geladen. Die mit dieser Umladung einhergehende Corona verursacht eine Belastung der Umwelt mit Ozon und Stickoxiden. Der Energieverbrauch ist erhöht. Insbesondere bei geringen Abständen zwischen den positiv und den negativ geladenen Bereichen auf der Oberfläche des Bandes kommt es zu mehreren Umladungen sowohl beim Ein- als auch beim Auslaufen des Bandes aus dem Wirkungsbereich der Ladeelektrode.

Die Anwendung von Wechselspannung erhöht die Neigung zu Glemmentladungen entlang der isolierenden Oberfläche des Bandes. Aufgrund des endlichen Ohmschen Widerstandes an der Oberfläche des Bandes sind Ladungsabstände von mehr als 1mm optimal. Dadurch ist es möglich, daß der Bogen so auf das Band aufgelegt ist, daß die gewissen Abstand zu einem Ladungsextremum aufweisen. Dadurch kann die maximale Haltekraft nicht an den Bogenkanten wirken, was für viele Anwendungen wünschenswert wäre.

Gemäß der Lösung nach DE 40 12 510 A1 ist eine messerförmige Elektrode oder eine Ladewalze vorgesehen, die ein große räumliche Ausdehnung aufweisen. Bei der Anwendung von hohen Wechselspannungen kann es zu kapazitiven Störeinkopplungen in elektronische Schaltungen kommen, die nur durch einen Mehraufwand an Abschirmblechen, Filtern und dergleichen abgeschwächt werden können.

Wenn die Ladewalze gleichzeitig als Spannwalze für das innen leitfähige Band verwendet werden soll, dann besteht aufgrund des Umschlingungswinkels eine hohe Kapazität zwischen der Laderolle und dem Band. Beim Anlegen der Wechselspannung entsteht dadurch eine hohe Blindleistung bzw. ein hoher Energiebedarf.

Bei der in US 3,726,520 beschriebenen Vereinzelungsvorrichtung für Bogen von der Oberseite eines Stapels wird als Förderelement eine zyklisch hin und her bewegte Folie oder ein endloses Band verwendet, welches von einer Corona-Ladungsquelle auf ein definiertes Potential gebracht wird. Bei Annäherung eines zu transportierenden Bogens wird dieser vom geladenen Förderelement angezogen und solange dort gehalten, bis eine Entladung des Förderelementes vorgenommen wird. Durch Influenz werden die Bogen ebenfalls aufgeladen, wobei die Gefahr besteht, daß die Bogen nach dem Verlassen des Förderelementes Restladungen besitzen, die beim Weitertransport oder bei der Weiterverarbetung hinderlich sein können. Insbesondere bei elektrostatischen Druckvorrichtungen sind Restladungen auf dem Bedruckstoff eine Ursache für Druckfehler.

Aufgabe der Erfindung ist es, eine Einrichtung zum Fördern von dünnen Werkstücken in einer drucktechnischen Maschine zu entwickeln, bei der das die dünnen Werkstücke tragende Förderelement einfach aufgebaut ist, keine den Transport und den in der drucktechnischen Maschine ablaufenden Prozeß behindernde Oberflächenstruktur besitzt und eine hohe Lebensdauer aufweist. Des weiteren sollen die an den dünnen Werkstücken verbleibenden Rest- oder Nettoladungen und die negaiven Umwelteinflüsse mininmiert werden.

Die Lösung der Aufgabe gelingt mit einer Einrichtung mit den Merkmalen des Anspruchs 1. Vorteilhafte Ausgestaltungen ergeben sich durch die Merkmale der Unteransprüche.

Als Förderelemente sind Bänder oder zylindrische Körper einsetzbar. Wesentlich ist, daß das Förderelement eine homogene Schicht aus dielektrischem Material enthält. Auf die Auflagefläche der Bogen auf dem Förderelement werden elektrische Ladungen mit ständig wechselnder Polarität aufgebracht. Dadurch können alle Bogenmaterialien, auf die in einem inhomogenen elektrischen Feld Kräfte wirken, auf dem Förderelement transportiert werden. Besonders geeignetes Bogenmaterial ist herkömmliches Papier.

Bei drucktechnischen Maschinen mit mehreren Bearbeitungsstationen für die Bogen können mehrere Förderelemente hintereinander oder parallel angeordnet werden. Je nach Erfordernis können als Bänder ausgeführte Förderelemente über Umlenkelemente geradlinige Transportwege oder Wege in beliebigen Kurven ermöglichen. Wenn es der Prozeß der drucktechnischen Maschine erfordert, kann die Auflagefläche der Bogen auf dem Förderelement von einer Ebene abweichen, wobei durch die elektrostatischen Kräfte die Bogen nahezu die Form der Auflagefläche annehmen können.

In die Förderelemente sind keine Elektroden integriert, die bei einem bandförmigen Förderelement vorzeitig verschleißen könnten. Dadurch, daß mit den Elektroden im Tragkörer in die isolierende Schicht des Förderelementes Ladungen eingeprägt werden, die entgegengesetzte Polarität aufweisen, entstehen an den Bogen keine oder fast keine Restladungen oder Nettoladungen, die den Weitertransport stören könnten. Die Ladungsmengen sind weitestgegehend ausgeglichen, so daß nach außen hin die isolierende Schicht des Förderelementes elektrostatisch neutral ist. Die Ladungen bleiben mindestens während des Transportes erhalten. Die Leitfähigkeit an der Oberfläche der isolierenden Schicht kann so dimensioniert sein, daß die Haltekräfte während des Transportes abnehmen und am Ende des Tranportweges nahezu verschwunden sind.

Es ist möglich, die noch vorhandenen Ladungen vor einem erneuten Einprägen von Ladungen zu neutralisieren, so daß ein bestimmter Abschnitt auf dem Förderelment nicht polarisiert ist. Als Materialien für die isolierende Schicht, auf der nach dem Einprägen die Ladungen partiell erhalten bleiben, sind isolierende Materialien, wie z. B. Kunststoffe wie Polyester, Polycarbonate, Polyimide oder PTFE geeignet.

Um die Haltekräfte der Bogen auf dem Förderelement konstant zu halten, ist es möglich, die die Ladung erzeugende Einrichtung mit variablen Spannungen zu betreiben oder die Abstände der Elektroden, welche die Ladungen auf das Förderband bringen, so zu gestalten oder zu verändern, daß über die Auflagefläche die Haltekräfte die gewünschte Verteilung und Beträge aufweisen. Wenn ein bereits bedruckter oder beschichteter Bogen gefördert werden soll, dann kann die Ladungsverteilung und die örtliche Ladungsmenge entsprechend dem Druckbild bzw. der Beschichtung erzeugt werden.

Da elektrische Ladungen sehr von den atmosphärischen Bedingungen und von den sich verändernden Materialeingenschaften des Förderlelementes und der Bogen abhängig sind, ist es möglich, die Ladungsverteilung und die örtlich aufzubringende Ladungsmenge entsprechend diesen Bedingungen oder Eigenschaften zu verändern. Dazu sind entsprechende Sensoren einsetzbar, die z. B. die Luftfeuchtigkeit, den Luftdruck, die Lufttemperatur und die Feuchtigkeit des Bogenmaterials erfassen. Die Sensorsignale können an eine Steuereinrichtung weitergeleitet werden, die nach Verarbeitung der Signale entsprechende Stellelemente der die Ladung erzeugenden Einrichtungen betätigen. Somit ist eine Steuerung oder Regelung der Ladungsverteilung bzw. der örtlichen Ladungsmenge möglich.

Ausführungsbeispeile der Erfindung sollen anhand von Zeichnungen nachstehend noch näher erläutert werden.

Es zeigen:
- Fig. 1: ein Schema einer Anordung mit bandförmigem Förderlelement,
- Fig. 2: eine Seitenansicht einer Laderolle,
- Fig. 3: ein Schema einer Ladungsverteilung,
- Fig. 4: eine Laderolle mit ringförmigen Elektroden,
- Fig. 5: ein Schema einer Ladungsverteilung bei Einsatz von ringförmigen Elektroden,
- Fig. 6: eine Laderolle mit schraubenförmigen Elektroden,
- Fig. 7: ein Schema einer Ladungsverteilung beim Einsatz von schraubenförmigen Elektroden,
- Fig. 8: eine Konstruktion mit zwei Laderollen und einschichtigem Förderband,
- Fig. 9: eine Konstruktion mit einer Laderolle mit zwei Gruppen von ringförmigen Kontakten,
- Fig. 10: eine Konstruktion mit zwei Laderollen und einem zweischichtigen Förderband,
- Fig. 11: eine Konstruktion mit einer Laderolle und einem zweischichtigen Förderband,
- Fig. 12: eine Konstruktion mit einer Laderolle und einer Erdungsrolle an einem zweischichtigen Förderband,
- Fig. 13: ein Schema einer Anordnung von Druckeinheiten entlang eines Förderbandes,
- Fig. 14: eine Ausführung einer Ladewalze,
- Fig. 15: ein Flußschema zur Erläuterung der Wirkungsweise der Einrichtung nach Fig. 1.

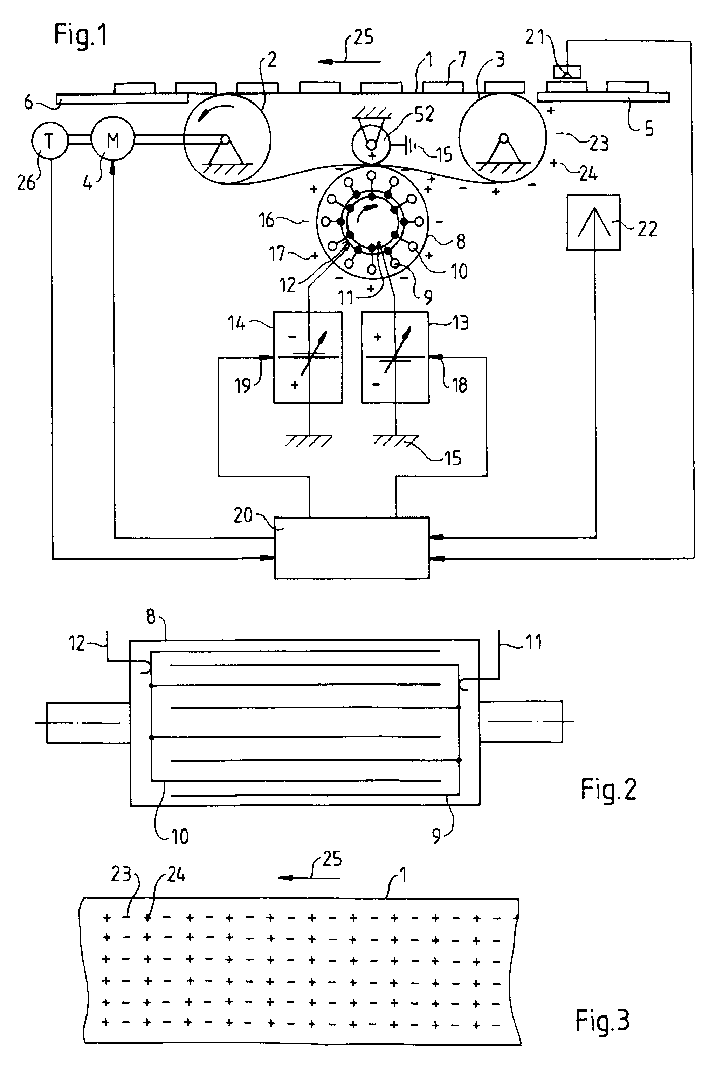

Bei der Anordnung nach Figur 1 ist ein Förderband 1 um zwei Umlenkrollen 2, 3 gelegt. Das Förderband 1 besteht aus einem dielektrischen Material. Die Umlenkrolle 2 ist zum Antrieb mit einem Motor 4 gekoppelt. Des weiteren enthält die Anordnung einen Anlegertisch 5 und einen Auslegertisch 6 für zu transportierende Bogen 7. Im unteren Trum liegt an dem Förderband 1 eine Laderolle 8 an, die durch Reibung mitgedreht wird. Gegenüber der Laderolle 8 rollt an der Innenseite des Förderbandes 1 eine Erdungsrolle 52 ab. die auf Erdpotential 15 liegt. In der Oberfläche der Laderolle 8 sind zwei Gruppen von Elektroden 9, 10 angeordnet, die über Schleifringe 11, 12 mit einstellbaren Hochspannungsquellen 13, 14 verbunden sind.

Die Elektroden 9 liegen gegenüber dem Erdpotential 15 auf negativem Potential 16, während die Elektroden 10 auf positivem Potential 17 liegen. Die Hochspannungsquellen 13, 14 weisen Steuereingänge 18, 19 auf, die mit einer Steuereinrichtung 20 in Verbindung stehen. Die Steuereinrichtung 20 steht weiterhin mit Feuchtesensoren 21, 22 für die Oberflächenfeuchtigkeit der Bogen 7 und für die Luftfeuchtigkeit in der Umgebung der Laderolle 8 in Verbindung. Die Steuereinrichtung 20 kann außer mit den Feuchtesensoren 21, 22 noch mit weiteren, nicht dargestellten Sensoren verbunden sein, wie zum Beispiel Sensoren für den Luftdruck und die Lufttemperatur.

In Figur 2 ist dargestellt, daß sich die Elektroden 9, 10 gleichmäßig verteilt über die gesamte Breite der Laderolle 8 erstrecken.

Zum Transport der Bogen 7 wird das Förderband 1 mit wechselnder Polarität aufgeladen. Eine mögliche Verteilung der Ladungen 23, 24 auf der Auflagefläche des Förderbandes 1 ist in Figur 3 gezeigt. Entsprechend der Anordnung der Elektroden 9, 10, wie sie in Figur 2 dargestellt ist, wechseln die negativen Ladungen 23 und die positiven Ladungen 24 in Transportrichtung 25 reihenweise. Die Aufladung des Förderbandes 1 geschieht mit Hilfe der Laderolle 8. Über die Steuerspannungen an den Steuereingängen 18, 19 werden die Hochspannungsquellen 13, 14 auf im wesentlichen gleiche Spannungsbeträge eingestellt. An den Elektoden 9, 10 bildet sich gegenüber der Erdungsrolle 54 ein statisches elektrisches Feld aus, das durch den Kontakt mit dem Förderband 1 durch eine Coronawirkung virtuelle Elektroden auf dem Förderband 1 ausprägt. Beim Auflegen eines Bogens 7 entsteht eine Kraftwirkung auf den Bogen 7 in Richtung senkrecht zur Oberfläche des Förderbandes 1. Am Ende der Transportstrecke wird der Bogen 7 mit einer nicht näher dargestellten Entnahmevorrichtung vom Förderband 1 auf den Auslegertisch 6 transportiert. Der Oberflächen-Widerstand des Förderbandes 1 kann so dimensioniert werden, daß sich die Ladungen 23, 24 bis zum Erreichen der Übergabeposition infolge eines Kriechstromes ausgleichen können. Die noch vorhandenen Haltekräfte können leicht von besagter Entnahmevorrichtung überwunden werden. Die örtliche Menge der Ladungen kann in Abhängigkeit von den Signalen der Feuchtesensoren 21, 22 verändert werden. Ebenso können die Geschwindigkeit des Motors 4 und die aufzubringende Ladungsmenge mit Hilfe der Steuereinrichtung 20 aufeinander abgestimmt werden, wenn die Signale eines mit der Motorwelle gekoppelten inkrementalen Drehgebers 26 verarbeitet werden.

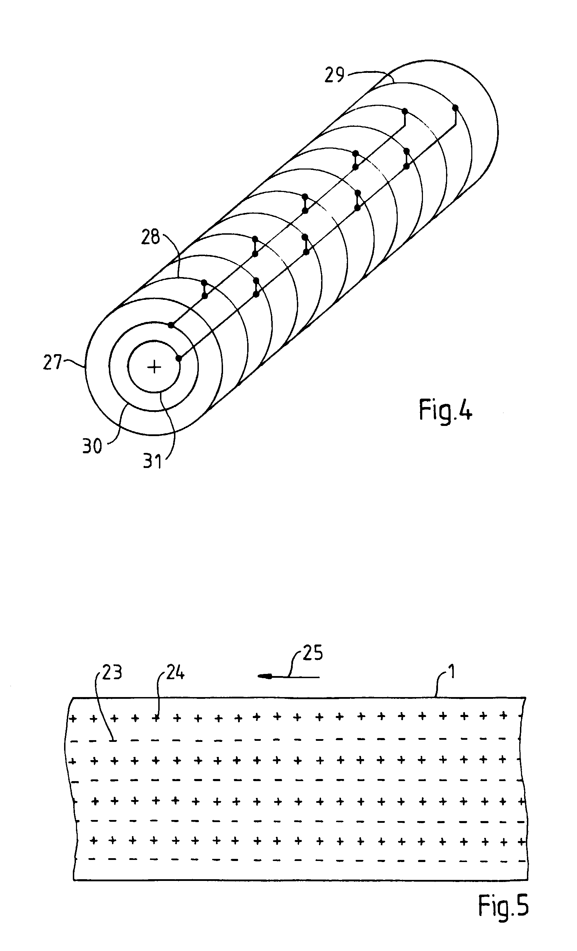

In Figur 4 ist eine weitere Ausführung einer Laderolle 27 gezeigt. Die Elektroden 28, 29 sind ringförmig in Umfangsrichtung an der Oberfläche der Laderolle 27 eingebettet. Jede zweite Elektrode 28, 29 ist miteinander verbunden und auf Schleifringe 30, 31 gelegt. Beim Anlegen einer weitestgehend erdsymmetrischen Gleichspannung an die Schleifringe 30, 31 entsteht an der Oberfläche des Förderbandes 1 die in Figur 5 gezeigte Ladungsverteilung. Neben der schon beschriebenen Abhängigkeit der Höhe der Gleichspannungen von der Transportgeschwindigkeit, der Luftfeuchtigkeit und der Feuchte des Bogens 7, kann die Gleichspannung auch in Abhängigkeit von der Größe und dem Abstand der Bogen 7 und in Abhängigkeit vom Druckbild auf den Bogen 7 verändert werden. Dazu kann im Transportweg ein Kantendetektor und eine Bildaufnahmeeinrichtung vorgesehen sein, deren Signale in einer Steuereinrichtung verarbeitet werden können.

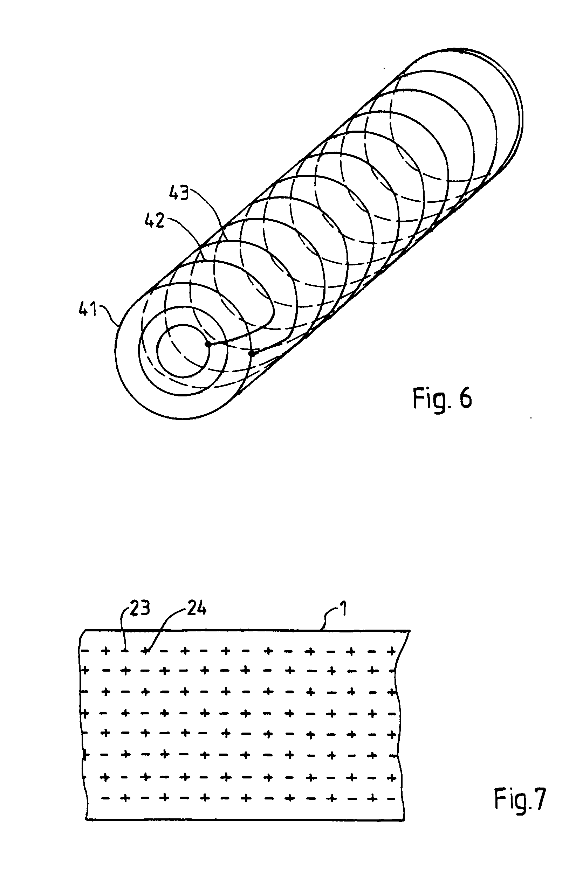

In Figur 6 ist ein Ausführungsbeispiel für ein Laderolle 41 dargestellt, deren zwei Elektroden 42, 43 schraubenförmig an der Oberfläche liegen. Dadurch kann man die Gleichmäßigkeit der Verteilung der Ladungen 23, 24 in der dielektrischen Schicht 39 des Förderbandes 1 verbessern. Eine solche Ladungsverteilung ist in Figur 7 gezeigt.

Falls eine stärkere Haltekraft in der dielektrischen Schicht des Förderbandes 1 gewünscht ist, können auch zwei der zuvor beschriebenen Laderollen 8, 27, 41 synchron drehend unmittelbar nacheinander vorgesehen sein. Dadurch läßt sich die Fläche der Ladungsinseln verändern.

Die Erfindung ist nicht auf die gezeigten Anordnungen beschränkt. Es können sowohl mehrer Förderbänder 1 in Verbund eingesetzt werden als auch Förderbänder 1 mit einem oder mehreren Transporttrommeln zusammenwirken. Ebenso ist es möglich, an einem Förderelement 1 mehrere Aufladevorrichtungen in berührender und/oder nicht berührender Anordnung vorzusehen, die ein Auffrischen von Ladungen 23, 24 über längere Transportwege bewirken.

Bei Anwendung eines einschichtigen Förderbandes 1 aus dielektrischem Material können Aufladevorrichtungen auch auf der der Aufladefläche für die Bogen 7 abgewandte Seite wirken, wobei das Material der Bogen 7 als Gegenelektrode benutzt werden kann oder es wird eine geerdete Anpreßwalze als Gegenelektrode benutzt. Im letzten Fall können auch Kraftwirkungen auf nichtleitende Substrate realisiert werden. Des weiteren entstehen Vorteile beim Zu- und Abführen der Bogen 7 und hinsichtlich des Staubes, der einen Einfluß auf die Ladungsverhältnisse hat.

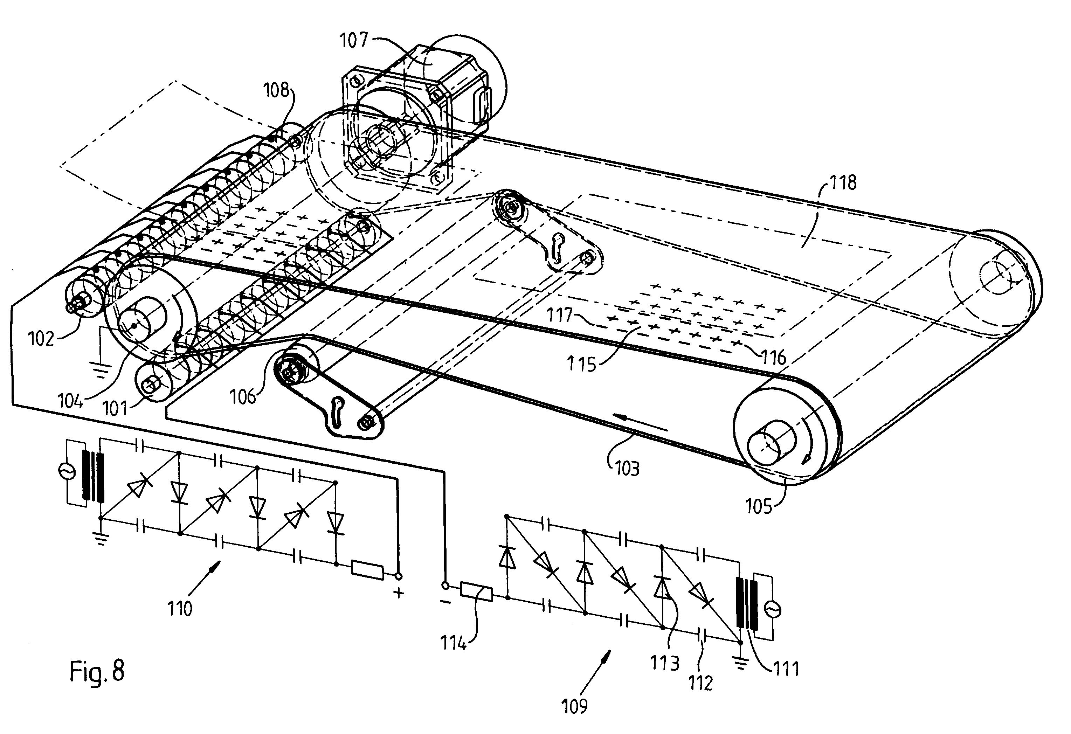

In Fig. 8 ist eine Ausführungsform einer Fördereinrichtung mit zwei Ladewalzen 101, 102 gezeigt. Das Förderband 103 ist über zwei Umlenkwalzen 104, 105 und über eine Spannrolle 106 gelegt. Die Umlenkwalze 104 ist zum Antrieb mit einem Motor 107 gekoppelt. Die Ladewalzen 101 und 102 bestehen jeweils aus äquidistant und koaxial angeordneten Ringen 108. Die Ringe 108 einer Ladewalze 101, 102 liegen auf gleichem Potential. Die Ringe 108 der Ladewalze 101 sind an eine negative Gleichspannungsquelle 109 und die Ringe 108 der Ladewalze 102 an eine positive Gleichspannungsquelle 110 angeschlossen. Jede Gleichspannungsquelle 109, 110 enthält einen Hochspannungstrafo 111, eine Kaskade aus Kondensatoren 112 und Dioden 113 und einen Vorwiderstand 114. Die Ladewalzen 101, 102 bzw. die Ringe 108 kontaktieren im Umschlingungsbereich um die Umlenkwalze 104 die Oberfläche des Förderbandes 103. Die Umlenkwalze 104 liegt an Erdpotential. Bei Bewegung des Förderbandes 103 rollen die Ringe 108 der Ladewalzen 101, 102 auf der Oberfläche des Förderbandes 103 ab. Durch einen Versatz der Ringe 108 der Ladewalzen 102, 103 in axialer Richtung um einen halben Ringabstand entsteht auf der Oberfläche des Förderbandes 103 ein Ladungsmuster 115, welches nur teilweise dargestellt ist. Das Ladungsmuster 115 enthält Spuren aus positiven und negativen Ladungen 116, 117. Die Spuren liegen in Förderrichtung und besitzen den selben Abstand wie die Ringe 108 zueinander. Ein auf der Oberfläche des Förderbandes 103 gehaltener Bogen 118 wird durch die Ladungen 116, 117 gehalten.

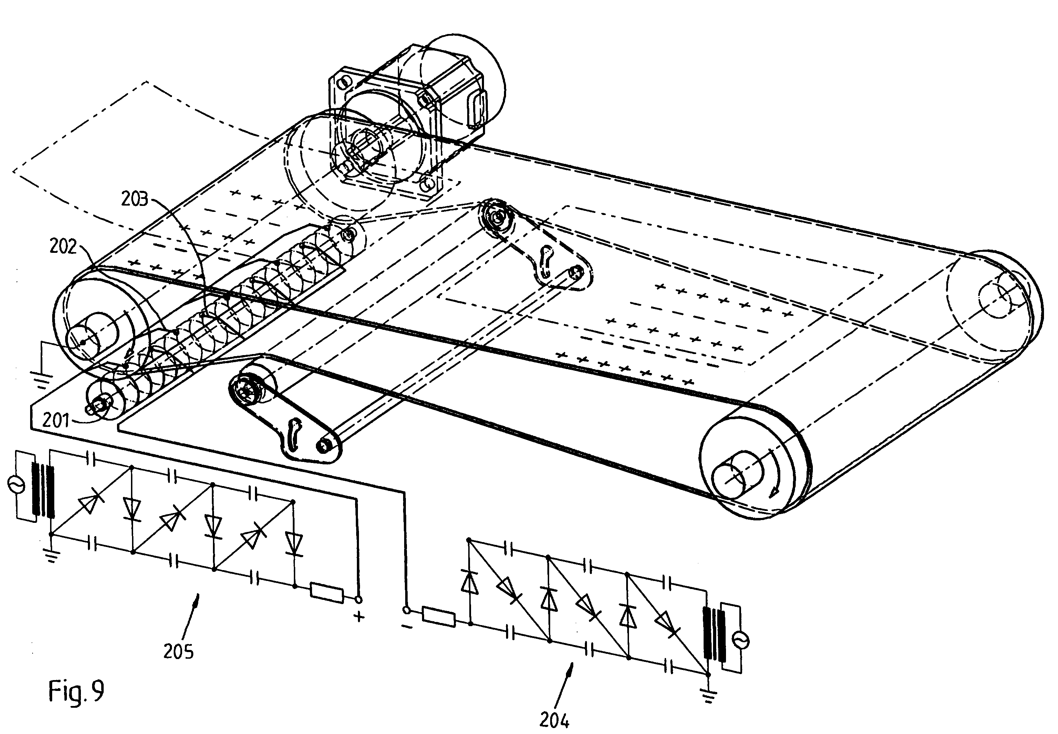

Bei der in Fig. 9 gezeigten Variante ist nur eine einzelne Ladewalze 201 vorgesehen. Die Ladewalze 201 enthält zwei Gruppen von Kontakt-Ringen 202, 203, die koaxial abwechselnd zueinander angeordnet sind. Jede Gruppe von Kontakt-Ringen 202, 203 ist an eine separate Gleichspannungsquelle 204, 205 entgegengesetzter Polarität angeschlossen.

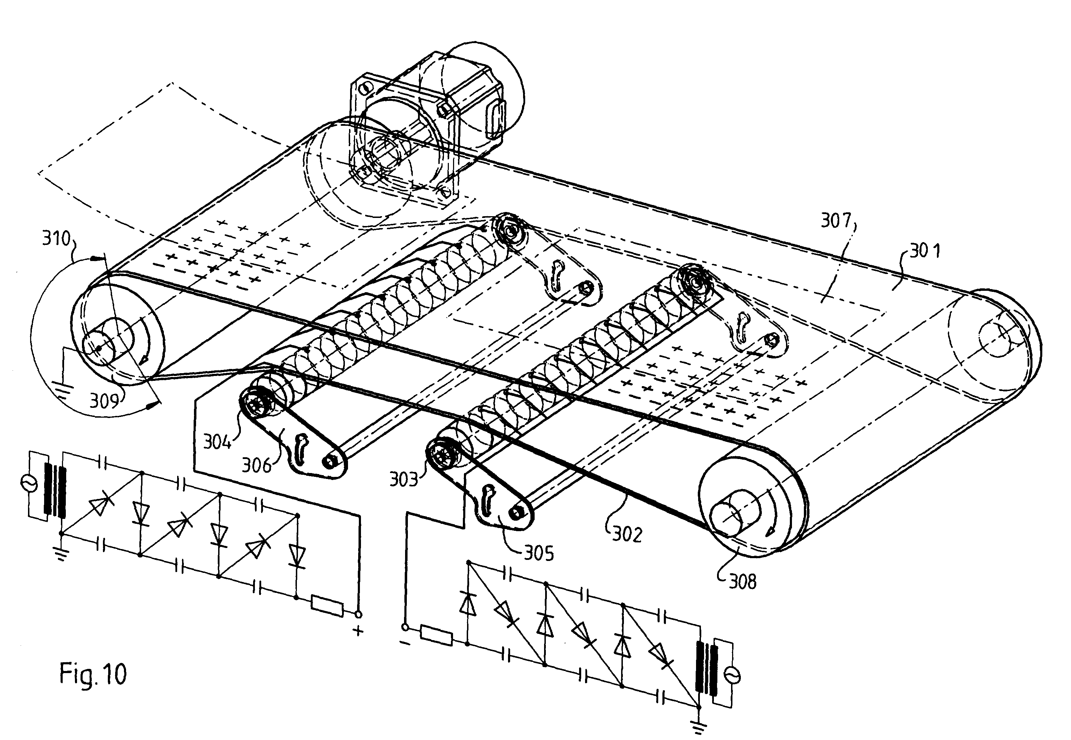

Gemäß der Ausführung nach Fig. 10 ist ein zweischichtiges Förderband 301 vorgesehen. Zum Erzeugen eines Ladungsmusters auf der Oberfläche des Förderbandes 301 sind im unteren Trum 302 zwei Ladewalzen 303 und 304 angeordnet, die jeweils in einer schwenkbaren Halterung 305 und 306 sitzen. Die Ladewalzen 303 und 304 drücken gegen das Förderband 301, wodurch das Förderband 301 gespannt wird. Die den Bogen 307 zugewandte Fläche des Förderbandes 301 besteht aus einem isolierenden Material, während die über die Umlenkwalzen 308, 309 laufende Innenfläche des Förderbandes 301 elektrisch leitend ist. Gegenüber dem einschichtigen Aufbau des Förderbandes 301 gemäß Fig. 8 und 9 ist es durch sich ausbildende Spiegelladungen bei der Ausführung nach Fig. 10 möglich, die Bogen 307 auch außerhalb des Umschlingungsbereiches 310 mit einer ausreichenden Haltekraft auf dem Förderband 301 aufzulegen.

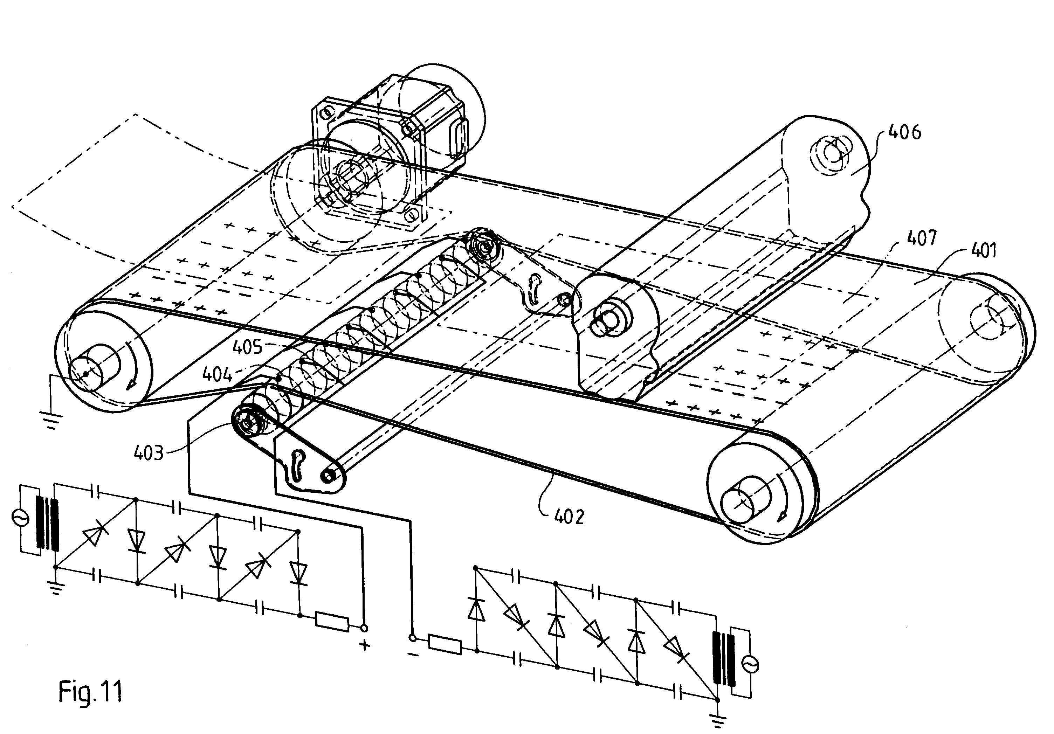

Eine der Variante nach Fig. 9 entsprechende Variante bei einem zweischichtigen Aufbau des Förderbandes 401 ist in Fig. 11 gezeigt. Die am unteren Trum 402 des Förderbandes 401 angeordnete Ladewalze 403 enthält wie die Ladewalze 201 in Fig. 9 zwei Gruppen von Kontakt-Ringen 404, 405. Die Ladewalze 403 wirkt gleichzeitig als Andrückwalze zur Straffung des Förderbandes 401 mit einer Druckeinheit 406 kann ein Bogen 407 während des Vorbeiförderns bedruckt werden.

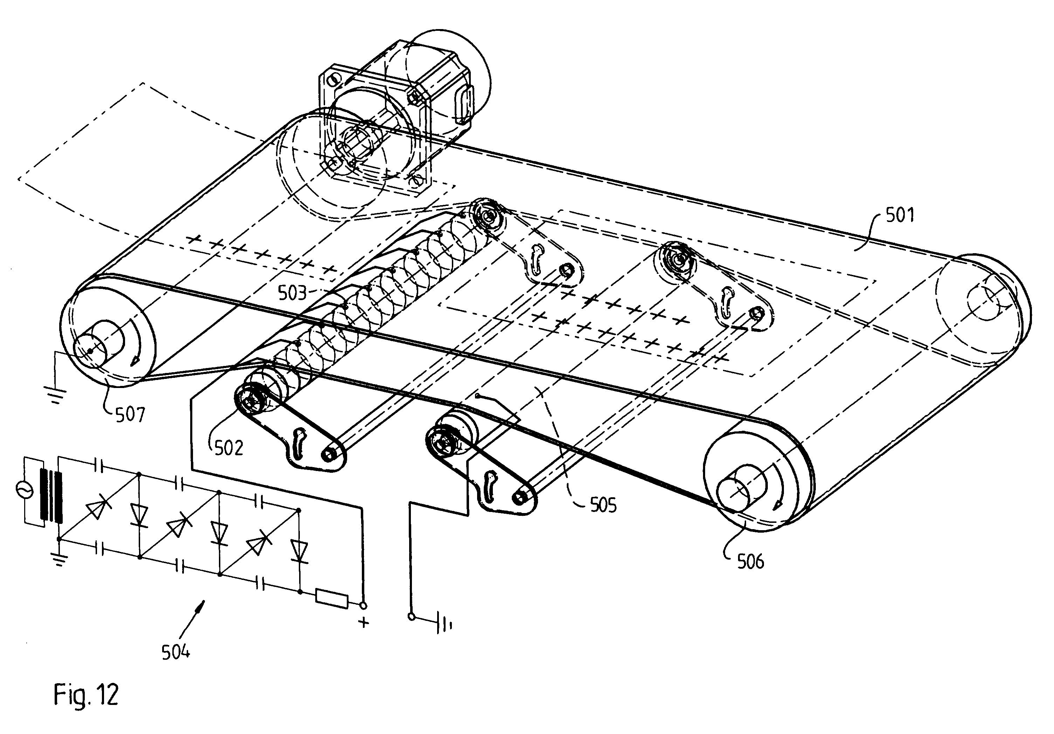

Die Besonderheit der Ausführung nach Fig. 12 besteht darin, daß einem Förderband 501 mit einem Zweischichtenaufbau genau eine Ladewalze 502 mit nur einer Gruppe von Kontakt-Ringen 503 zugeordnet ist. Die Kontakt-Ringe 503 sind mit einer Gleichspannungsquelle 504 verbunden. Der Ladewalze 502 ist eine Erdungswalze 505 vorgeordnet. Bei Bewegung des Förderbandes 501 um die Umlenkwalzen 506, 507 wird das auf der Oberfläche des Förderbandes 501 noch bestehende Ladungsdichtemuster beseitigt. Die Oberfläche des Förderbandes 501 ist im unteren Trum zwischen der Erdungswalze 505 und der Ladewalze 502 auf Erdpotential neutralisiert. Durch die am Pluspol der Gleichspannungsquelle 504 liegenden Kontakt-Ringe 503 bilden sich auf der Oberfläche des Förderbandes 501, wie in Teilbereichen dargestellt, positive Ladungsspuren in einem Abstand aus, der dem Abstand der Kontakt-Ringe 503 entspricht.

In einer nicht dargestellten Variante kann die Walze 505 an eine negative Gleichspannungsquelle angeschlossen sein. In diesem Fall würden durch die Kontakt-Ringe 503 die negativen Ladungen in positive Ladungen umgepolt, wobei die zwischen den Kontakt-Ringen 503 liegenden Spuren auf negativem Potential verbleiben. Das sich ausbildende Ladungsdichtemuster entspricht z. B. dem in Fig. 11 gezeigtem Muster.

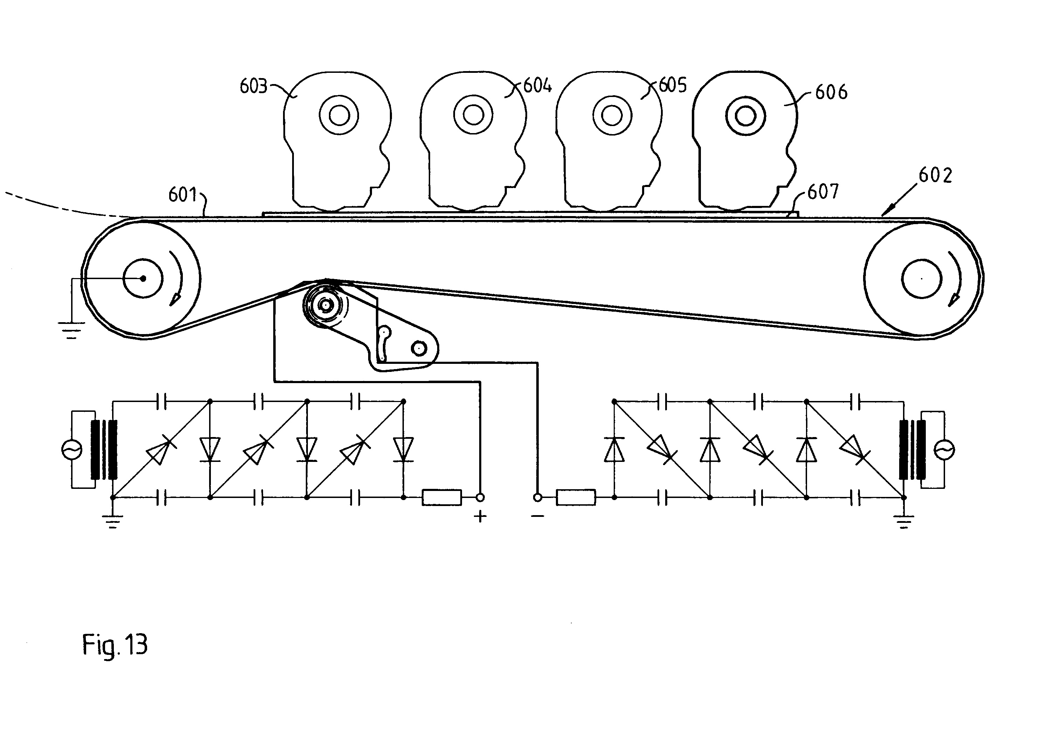

In Fig. 13 ist gezeigt, daß die Fördereinrichtung Bestandteil einer Druckvorrichtung sein kann. Dem oberen Trum 601 des in Fig. 13 gezeigten Förderbandes 602 sind vier Druckeinheiten 603 bis 606 zugeordnet, wodurch ein vorbeilaufender Bogen 607 im Vierfarbendruck bedruckt werden kann. Die sich auf dem Förderband 602 ausbildenden Ladungen können so dimensioniert sein, daß zur Übertragung von den Druckvorrichtungen 603 bis 606 auf den Bogen 607 elektrostatische Kräfte auf Druckfarbe oder auf Tonerpartikel zur Wirkung gebracht werden.

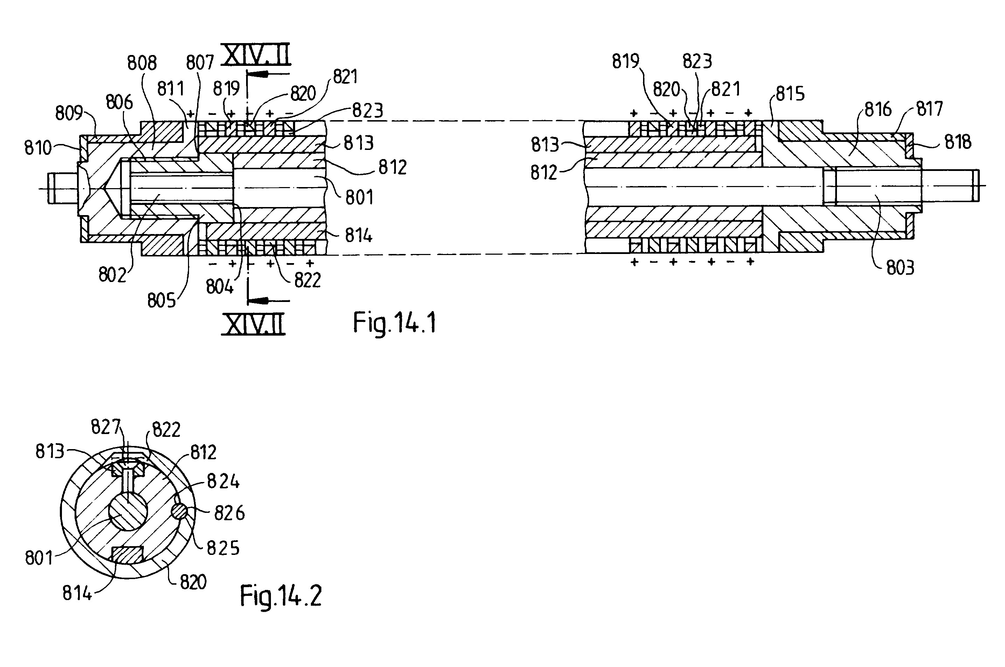

In Fig. 14 ist eine Konstruktionsvariante einer Ladewalze gezeigt, wie sie in den Varianten zu den Figuren 4, 9 oder 11 verwendet wurde.

Die Ladewalze enthält eine Welle 801 mit Gewindeenden 802, 803. Gegen eine Anschlagfläche 804 der Welle 801 ist ein elektrisch isolierendes Teil 805 geschraubt. Auf ein Außengewinde 806 und gegen eine Anschlagfläche 807 des Teils 805 ist ein hülsenförmiges Teil 808 geschraubt, welches elektrisch leitend ist. Das Teil 808 ist von Isolierteilen 809 und 810 umgeben. Das Teil 808 ist an einem Ende flanschförmig ausgebildet. Die Mantelfläche des Flansches 811 bildet eine erste Kontaktfläche, die positiv geladen ist, wenn das Teil 808 mit einer positiven Gleichspannungsquelle verbunden ist. Auf der Welle 801 sitzt ein zylindrisches elektrisch isolierendes Teil 812 mit gleichem Durchmesser wie der größte Außendurchmesser des Teiles 805. Entlang einer Mantellinie sind in das Teil 812 Verteilerleisten 813, 814 eingebettet. Die Verteilerleiste 813 für positives Potential kontaktiert stirnseitig den Flansch 811. Die Verteilerleiste 814 kontaktiert einen Flansch 815 eines hülsenförmigen Teils 816, welches auf das Gewindeende 803 geschraubt ist. Die Mantelfläche des Flansches 815 bildet eine Kontaktfläche, die negativ geladen ist, wobei das Teil 816 mit einer negativen Gleichspannungsquelle verbunden ist. Das Teil 816 ist von Isolierteilen 817, 818 umgeben. Auf der Mantelfläche des Teiles 812 sind Gruppen von Kontakt-Ringen 819, 820 mit zwischenliegenden Isolierscheiben 821 angeordnet. Die erste Gruppe von Kontakt-Ringen 819 kontaktiert die Verteilerleiste 813 und liegt damit auf positivem Potential. Die zweite Gruppe von Kontakt-Ringen 820 ist mit der Verteilerleiste 814 verbunden, die auf negativem Potential liegt. Die Kontakt-Ringe 819, 820 besitzen Aussparungen 822, 823, um die Verteilerleiste 813, 814 mit entgegengesetzter Polarität zu überbrücken. Auf der Außenseite des Teiles 812 und auf der Innenseite der Kontakt-Ringe 819, 820 sind halbzylindrische Ausnehmungen 824, 825 vorhanden, in denen zur Verdrehsicherung der Kontakt-Ringe 819, 820 ein isolierendes zylindrisches Teil 826 eingebracht ist. Die Verteilerleisten 813, 814 sind mit Schrauben 827 im Teil 812 befestigt. Die Verbindungen der Teile 806 und 816 mit den Gleichspannungsquellen sind nicht weiter dargestellt. Diese Verbindungen können mit herkömmlichen Schleifkontakten hergestellt werden.

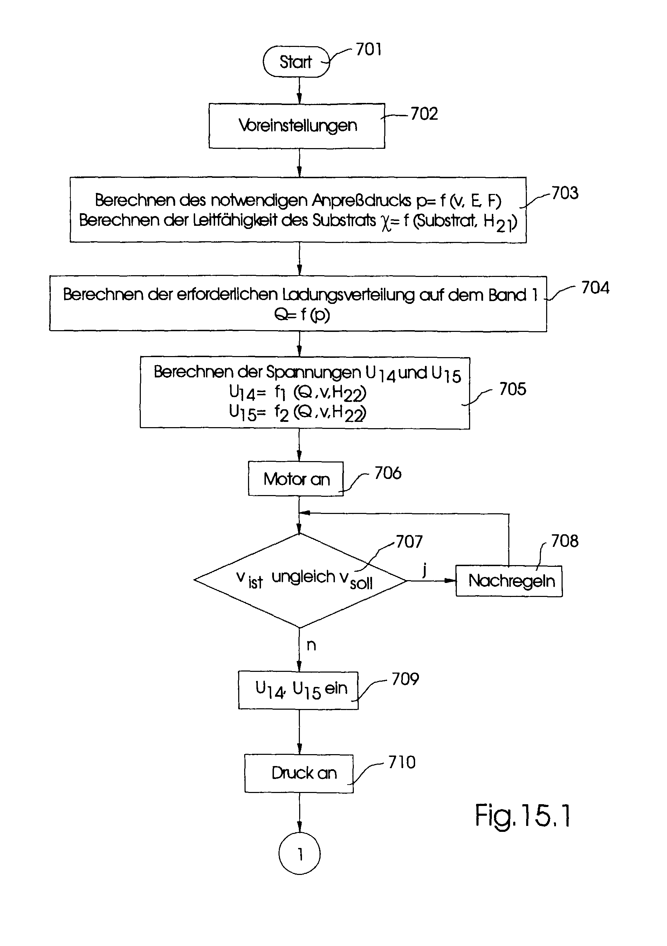

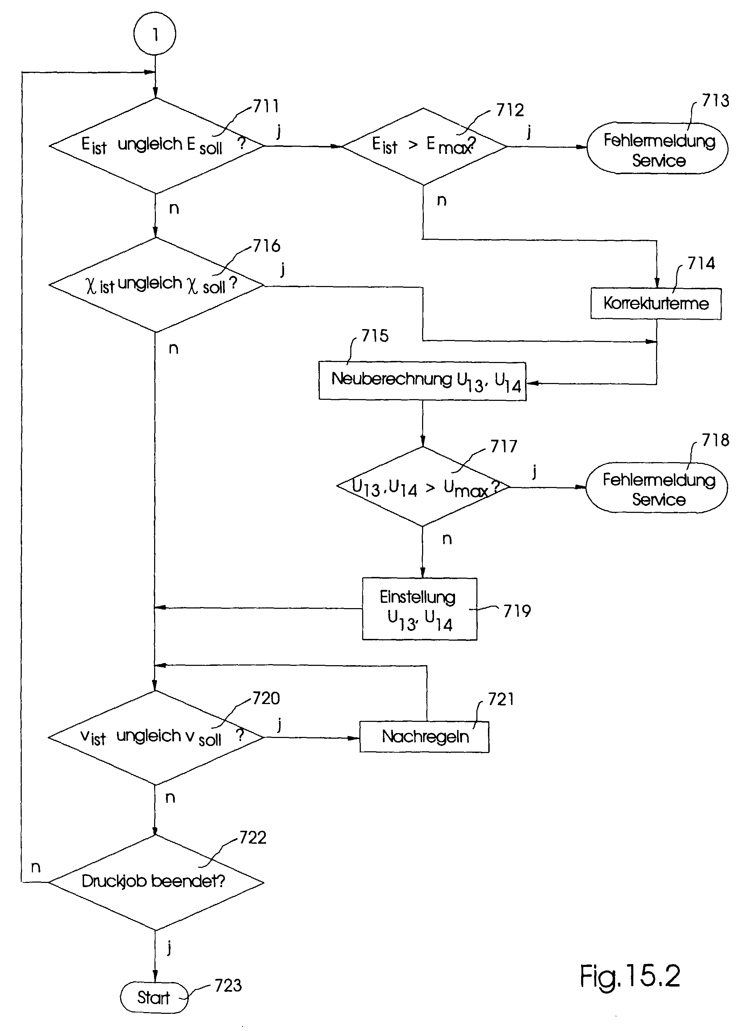

Anhand von Fig. 15 und dem Schema nach Fig. 1 soll nachstehend die Wirkungsweise der Steuereinrichtung 20 in Zusammenhang mit dem Fördern von Bogen 7 durch eine Druckmaschine beschrieben werden.

Das Flußschema nach Fig. 15 enthält neben einem Startschritt 701 einen Schritt 702, bei dem Voreinstellungen vorgenommen werden. In dem Schritt 702 werden alle für einen Auftrag spezifischen Daten, wie z. B. Papierart, Papierstärke, Papierfeuchtigkeit, Papierformat und Anzahl der Drucke eingegeben. Aus den spezifischen Auftragsdaten werden in einem Schritt 703 der notwendige Anpreßdruck p der Bogen 7 auf dem Förderband 1 und die Leitfähigkeit æ des Materials der Bogen 7 berechnet. In die Berechnung des notwendigen Anpreßdruckes p gehen u. a. die Druckgeschwindigkeit v, die Feldstärke E im Material des Bogens 7 und die Kraft F ein, die auf den Bogen 7 durch die Wirkung einer Druckvorrichtung entsteht. Die Leitfähigkeit æ des Bogen 7 ergibt sich aus den Materialeigenschaften des Bogens 7 und aus der Feuchtigkeit H₂₁, die von dem Feuchtesensor 21 erfaßt wird. In einem Schritt 704 wird unter Verwendung des im Schritt 703 berechneten Anpreßdruckes p die erforderliche Ladungsverteilung Q auf dem Förderband 1 berechnet, wobei der Abstand der Elektroden 9, 10 zueinander berücksichtigt wird. In einem weiteren Schritt 705 wird die Höhe der Spannungen U₁₃ und U₁₄ berechnet, deren Betrag von der im Schritt 704 berechneten Ladungsverteilung Q, von der Geschwindigkeit v des Förderbandes 1 und der Feuchtigkeit H₂₂ in der Umgebung abhängt. Die-Feuchtigkeit H₂₂ wird von dem Feuchtesensor 22 erfaßt. Nach den vorgehend beschriebenen Voreinstellungen und Berechnungen in den Schritten 702 bis 705 kann in einem Schritt 706 der Motor 4 eingeschaltet werden. Wenn in einem Schritt 707 festgestellt wird, daß die vorhandene Geschwindigkeit vᵢₛₜ des Förderbandes 1 nicht der Soll-Geschwindigkeit vₛₒₗₗ entspricht, dann wird die Drehzahl des Motors 4 in einem Schritt 708 nachreguliert. Wenn die Soll-Geschwindigkeit vₛₒₗₗ erreicht ist, dann werden in einem Schritt 709 die Spannungen U₁₃ und U₁₄ an die Elektroden 9, 10 gelegt. Sobald ein auf dem Förderband 1 gehaltener Bogen 7 die Druckvorrichtung erreicht, wird die Druckvorrichtung in einem Schritt 710 in Betrieb gesetzt. Während des Bedruckens der Bogen 7 wird in einem Schritt 711 laufend überprüft, ob die im Material der Bogen 7 vorhandenen Feldstärke Eᵢₛₜ der Soll-Feldstärke Eₛₒₗₗ entspricht. Wenn die vorhandene Feldstärke Eᵢₛₜ größer als die Soll-Feldstärke Eₛₒₗₗ ist, was in einem Schritt 712 überprüft wird, dann wird in einem Schritt 713 eine Fehlermeldung ausgegeben. Im anderen Fall werden in einem Schritt 714 Korrekturterme gebildet, mit deren Hilfe in einem Schritt 715 die Beträge der Spannungen U₁₃ und U₁₄ neu berechnet werden. In einem Schritt 716 wird überprüft, ob eine Änderung der Leitfähigkeit æ infolge von Änderungen der Oberflächenfeuchtigkeit H₂₁ der Bogen 7 oder infolge von Änderungen der Luftfeuchtigkeit H₂₂ aufgetreten ist. Wenn dies der Fall ist, dann werden die Beträge der Spannungen U₁₃, U₁₄ im Schritt 715 entsprechend der Leitfähigkeitsänderung korrigiert. In einem Schritt 717 wird überprüft, ob die Spannungen U₁₃, U₁₄ einen Maximalwert Uₘₐₓ überschreiten. Bei Überschreitung wird in einem Schritt 718 eine Fehlermeldung ausgegeben. Wenn die Spannungen U₁₃, U₁₄ im zulässigen Bereich liegen, dann werden die Hochspannungsquellen 13, 14 über die Steuereingänge 18, 19 in einem Schritt 719 auf die neuen Werte U₁₃, U₁₄ eingestellt. In einem Schritt 720 wird die Geschwindigkeit vᵢₛₜ des Förderbandes 1 laufend mit einer Soll-Geschwindigkeit vₛₒₗₗ verglichen. Bei Abweichungen von der Soll-Geschwindigkeit vₛₒₗₗ erfolgt in einem Schritt 721 ein Nachregeln der Geschwindigkeit. Schließlich wird in einem Schritt 722 laufend überprüft, ob die vorgegebene Anzahl von Bogen 7 bereits bedruckt wurde. Wenn nicht, dann wiederholen sich die Schritte 711 bis 722, bis die voreingegebene Bogenanzahl erreicht ist. Das Druckverfahren ist mit dem Schritt 723 beendet.

## Patentansprüche

1. Einrichtung zum Fördern von dünnen Werkstücken in einer drucktechnischen Maschine, bestehend aus mindestens einem bewegten Förderelement (1, 103, 301, 401, 501, 601), dessen Auflagefläche elektrisch isolierend ist und auf dem mindestens ein Werkstück (7, 108, 307, 407, 607) während des Förderns aufliegt,
wobei durch Kontaktaufladung auf der Oberfläche des Förderelementes (1, 103, 301, 401, 501, 601) Bereiche wechselnder Ladungsdichte ausgebildet sind und das Werkstück (7, 108, 307, 407, 607) mit Hilfe elektrostatischer Kräfte gehalten wird,
**dadurch gekennzeichnet,**
daß mindestens eines Gruppe (101, 102, 202, 203, 303, 304, 404, 405, 503) von die Oberfläche des Förderelementes (1, 103, 301, 401, 501, 601) berührenden Kontakten (9, 10, 28, 29, 42, 43, 108, 819, 820) vorgesehen ist,
daß die Kontakte (9, 10, 28, 29, 42, 43, 108, 819, 820) quer zur Förderrichtung des Werkstückes (7, 108, 307, 407, 607) angeordnet sind und über die gesamte Breite des Werkstückes (7, 108, 307, 407, 607) verteilt liegen,
und daß die Kontakte (9, 10, 28, 29, 42, 43, 108, 819, 820) an mindestens einer Gleichspannungsquelle (13, 14, 109, 110, 204, 205, 504) angeschlossen sind.

2. Einrichtung nach Anspruch 1,
**dadurch gekennzeichnet,**
daß mindestens zwei Gruppen von die Oberfläche des Förderelementes (1, 103, 301, 401, 501, 601) berührenden Kontakten vorgesehen sind,
wobei die Kontakte (9, 10, 28, 29, 42, 43, 108, 819, 820) verschiedener Gruppen quer zur Förderrichtung abwechselnd an Gleichspannungsquellen (13, 14, 109, 110, 204, 205, 504) unterschiedlicher Potentialhöhe angeschlossen sind.

3. Einrichtung nach Anspruch 1,
**dadurch gekennzeichnet,**
daß jede Gruppe von Kontakten (9, 10, 28, 29, 42, 43, 108, 819, 820) jeweils aus koaxial angeordneten Ringen gleichen Durchmessers besteht, die auf der Oberfläche des Förderelementes (1, 103, 301, 401, 501, 601) abrollen und die elektrisch leitend miteinander verbunden sind.

4. Einrichtung nach Anspruch 1,
**dadurch gekennzeichnet,**
daß die Kontakte (9, 10, 28, 29, 42, 43, 108, 819, 820) aller Gruppen koaxial zueinander angeordnet sind.

5. Einrichtung nach einem der vorhergehenden Ansprüche,
**dadurch gekennzeichnet,**
daß die Kontakte (9, 10, 28, 29, 42, 43, 108, 819, 820) auf einem Zylinder aus isolierendem Material angeordnet sind.

6. Einrichtung nach einem der vorhergehenden Ansprüche,
**dadurch gekennzeichnet,**
daß der Abstand der Kontakte (9, 10, 28, 29, 42, 43, 108, 819, 820) in Richtung quer zur Förderrichtung in Abhängigkeit von den Abmessungen des Werkstückes (7, 108, 307, 407, 607) einstellbar sind.

7. Einrichtung nach Anspruch 1,
**dadurch gekennzeichnet,**
daß eine Gruppe von die Oberfläche des Förderelementes (501) berührenden Kontakten (503) vorgesehen ist, die an eine Gleichspannungsquelle (504) angeschlossen sind, und daß den Kontakten in (503) Förderrichtung eine elektrostatische Ladungsvorrichtung (505) vorgeordnet ist, mit der auf der Oberfläche des Förderelementes (501) eine homogene Ladung erzeugbar ist, deren Potential entgegengesetzt dem Potential der Gleichspannungsquelle (504) ist.

## Claims

1. Device for conveying thin workpieces in machines used in the printing technology field, including at least one movable conveying element (1, 103, 301, 401, 501, 601), the contact surface of which being electrically insulating and on which at least one workpiece (7, 108, 307, 407, 607) is resting as it is being conveyed, with regions of varying charge density being formed on the contact surface of the conveying element (1, 103, 301, 401, 501, 601) by charges applied thereto and the workpiece (7, 108, 307, 407, 607) being held by electrostatic forces,
**characterised**
in that at least one group (101, 102, 202, 203, 303, 304, 404, 405, 503) of contacts (9, 10, 28, 29, 42, 43, 108, 819, 820) touching the surface of the conveying element (1, 103, 301, 401, 501, 601) is provided;
that the contacts (9, 10, 28, 29, 42, 43, 108, 819, 820) are arranged transverse to the conveying direction of the workpiece (7, 118, 307, 407, 607) and are distributed across the entire width of the workpiece (7, 118, 307, 407, 607); and
that the contacts (9, 10, 28, 29, 42, 43, 108, 819, 820) are connected to at least one d. c. voltage source (13, 14, 109, 110, 204, 205, 504).

2. Device according to Claim 1,
**characterised**
in that at least two groups of contacts touching the surface of the conveying element (1, 103, 301, 401, 501, 601) are provided, the contacts (9, 10, 28, 29, 42, 43, 108, 819, 820) of different groups being alternately connected transverse to the conveying direction to d. c. voltage sources (13, 14, 109, 110, 204, 205, 504) of varying potential.

3. Device according to Claim 1,
**characterised**
in that each group of contacts (9, 10, 28, 29, 42, 43, 108, 819, 820) is formed of coaxially arranged rings of like diameter which roll off on the surface of the conveying element (1, 103, 301, 401, 501, 601) and are connected to one another so as to be electrically conductive.

4. Device according to Claim 1,
**characterised**
in that the contacts (9, 10, 28, 29, 42, 43, 108, 819, 820) of all groups are arranged coaxially with respect to one another.

5. Device according to anyone of the preceding claims,
**characterised**
in that the contacts (9, 10, 28, 29, 42, 43, 108, 819, 820) are arranged on a cylinder formed of insulating material.

6. Device according to anyone of the preceding claims,
**characterised**
in that the distance of the contacts (9, 10, 28, 29, 42, 43, 108, 819, 820) is adjustable in a direction transverse to the conveying direction in accordance with the dimensions of the workpiece (7, 118, 307, 407, 607).

7. Device according to Claim 1,
**characterised**
in that one group of contacts (503) touching the surface of the conveying element (501) is provided which is connected to a d. c. voltage source (504); and
that an electrostatic-charge device (505) is disposed upstream of the group of contacts (503), as viewed in conveying direction, for generating on the surface of the conveying element (501) a homogeneous charge having a potential which is the opposite of the potential of the d. c. voltage source (504).

## Revendications

1. Dispositif pour transporter des objets minces dans une presse à imprimer, constitué d'au moins un élément transporteur mobile (1, 103, 301, 401, 501, 601), dont la surface d'appui est électriquement isolée et sur laquelle pendant le transport repose au moins un objet (7, 108, 307, 407, 607),
dans le cas duquel, par création de charges par des contacts, sur la surface de l'élément transporteur (1, 103, 301, 401, 501, 601) se forment des zones de densité de charge alternante et l'objet (7, 108, (7, 108, 307, 407, 607) est maintenu à l'aide de forces électrostatiques,
caractérisé par le fait
qu'est prévu au moins un groupe (101, 102, 202, 203, 303, 304, 404, 405, 503) de contacts (9, 10, 28, 29, 42, 43, 108, 819, 820) qui touchent la surface de l'élément transporteur (1, 103, 301, 401, 501, 601),
que les contacts (9, 10, 28, 29, 42, 43, 108, 819, 820) sont disposés transversalement par rapport à la direction de transport de l'objet (7, 108, 307, 407, 607) et sont répartis sur toute la largeur de l'objet (7, 108, 307, 407, 607),
et que les contacts (9, 10, 28, 29, 42, 43, 108, 819, 820) sont reliés à au moins une source de tension continue (13, 14, 109, 110, 204, 205, 504).

2. Dispositif selon la revendication 1,
caractérisé par le fait
que sont prévus au moins deux groupes de contacts qui touchent la surface de l'élément transporteur (1, 103, 301, 401, 501, 601), les contacts (9, 10, 28, 29, 42, 43, 108, 819, 820) de différents groupes étant alternativement reliés, transversalement par rapport à la direction du transport, à des sources de tension continue (13, 14, 109, 110, 204, 205, 504) de valeur du potentiel différente.

3. Dispositif selon la revendication 1,
caractérisé par le fait
que chacun des groupes de contacts (9, 10, 28, 29, 42, 43, 108, 819, 820) est constitué d'anneaux de même diamètre qui sont disposés coaxialement, qui roulent sur la surface de l'élément transporteur (1, 103, 301, 401, 501, 601) et sont reliés l'un à l'autre avec conduction électrique.

4. Dispositif selon la revendication 1,
caractérisé par le fait
que les contacts (9, 10, 28, 29, 42, 43, 108, 819, 820) de tous les groupes sont disposés coaxialement l'un à l'autre.

5. Dispositif selon l'une des revendications précédentes,
caractérisé par le fait
que les contacts (9, 10, 28, 29, 42, 43, 108, 819, 820) sont disposés sur un cylindre en matériau isolant.

6. Dispositif selon l'une des revendications précédentes,
caractérisé par le fait
que la distance des contacts (9, 10, 28, 29, 42, 43, 108, 819, 820) selon la direction transversale à la direction de transport peut se régler en fonction des dimensions de l'objet (7, 108,307, 407, 607).

7. Dispositif selon la revendication 1,
caractérisé par le fait
qu'est prévu un groupe de contacts (503) qui touchent la surface de l'élément transporteur (501), et sont reliés à une source de tension continue (504), et qu'en avant des contacts (503), selon la direction du transport, est disposé un dispositif de charge électrostatique (505) avec lequel peut être produite sur la surface de l'élément transporteur (501) une charge homogène dont le potentiel est opposé au potentiel de la source de tension continue (504).
